# EUROPÄISCHE PATENTSCHRIFT

(11) **EP 0 729 440 B1**
(45) Veröffentlichungstag und Bekanntmachung des Hinweises auf die Patenterteilung: **10.03.1999**
(21) Anmeldenummer: 95922398.3
(22) Anmeldetag: 04.07.1995
(51) Int. Cl.: C02F 11/16, C02F 11/14, B01J 2/20

(54) **ANLAGE ZUM TROCKNEN VON SCHLAMM**
FACILITY FOR DRYING MUD
INSTALLATION DE SECHAGE DE BOUE

(30) Priorität: 04.07.1994 CH 2123/94
(43) Veröffentlichungstag der Anmeldung: 04.09.1996
(73) Patentinhaber: Wegier, Andreas Christian, 4538 Oberbipp (CH)
(72) Erfinder: Wegier, Andreas Christian, 4538 Oberbipp (CH)
(74) Vertreter: BOVARD AG - Patentanwälte
(86) Internationale Anmeldenummer: CH9500156
(87) Internationale Veröffentlichungsnummer: WO9601232

(56) Entgegenhaltungen:
- EP-A- 0 166 200
- EP-A- 0 303 755
- WO-A-92/00250
- WO-A-93/19843
- DE-A- 2 853 054
- DE-A- 2 941 802
- DE-A- 4 235 422

## Beschreibung

Die vorliegende Erfindung bezieht sich auf eine Anlage zum Trocknen von Schlamm, welche eine Trocknungskammer mit einer in die Trocknungskammer mündenden Eingabevorrichtung für den zu trocknenden Schlamm und mit einer Entladeöffnung für den getrockneten Schlamm umfasst und eine Fördereinrichtung innerhalb der Trocknungskammer, welche sich in der Förderrichtung von der Eingabevorrichtung zur Entladeöffnung erstreckt, wobei die Fördereinrichtung eine Auflagefläche für den Schlamm aufweist, welche gleichzeitig zum Fördern und Trocknen des Schlammes bestimmt ist, hat. Die Anlage umfasst im weiteren mindestens ein Heizelement, das der Auflagefläche gegenüberliegt, wobei der auf der Auflagefläche liegende Schlamm zwischen dem Heizelement und der Auflagefläche durchgeführt wird. An der Eingabevorrichtung angeordnete, nebeneinanderliegende und nahe dem flussaufwärtsgelegenen Ende der Fördereinrichtung vorhandene Ausgabeöffnungen für den Schlamm sowie eine Beschickungspumpe ausserhalb der Trocknungskammer mit einer Zuführöffnung für den Schlamm und eine Förderleitung zur Eingabevorrichtung sind ebenfalls an der Anlage vorhanden.

Eine gattungsgleiche Anlage zum Trocknen von Schlamm ist in der internationalen Patentanmeldung mit der Veröffentlichungsnummer WO 92/00250 beschrieben. Dort ist in einer Trocknungskammer ein Bandförderer vorhanden, mit einem als Endlosband ausgebildeten umlaufenden Rost. Beim einen Ende des Bandförderers befindet sich eine Eingabevorrichtung für den Schlamm und beim anderen Ende des Bandförderers weist die Trocknungskammer eine Entladeöffnung für den getrockneten Schlamm auf. Die Eingabevorrichtung ist nahe dem Rost gelegen, so dass daraus austretender Schlamm in Form eines Streifens auf dem umlaufenden Rost abgelegt wird. Heizelemente unter- und oberhalb dem Rost erzeugen die zum Trocknen des Schlammes notwendige Wärme. Am Ende des Rostes ist eine schräg angeordnete Widerlageplatte vorhanden, an welche die getrockneten Schlammstreifen anstossen und in Stücke von zufälliger Grösse zerbrochen werden. Diese Stücke fallen durch die Entladeöffnung in eine Mühle, wo sie weiter auf eine gewünschte Grösse verkleinert werden. Die in die Trocknungskammer mündende Eingabevorrichtung für den Schlamm ist als Mundstück eines ausserhalb der Kammer angeordneten Extruders ausgebildet, der im wesentlichen einen Schneckenförderer umfasst. Die Eingabevorrichtung bzw. der Extruder ist dabei parallel zur Förderrichtung des Rostes des Bandförderers angeordnet. In der Welle der Förderschnecke sind weitere Heizelemente angeordnet, um den zu trocknenden Schlamm bereits ausserhalb der Trocknungskammer vorzuheizen. Je nach der Breite des Bandförderers können mehrere nebeneinanderliegende Extruder vorgesehen sein, so dass gleichzeitig mehrere Schlammstreifen auf den Rost ausgegeben werden können. Mit dem speziell geformten Mundstück des Extruders werden relativ dünnwandige, aussen mit Rippen versehene, innen hohle Schlammstreifen gebildet. Durch die relativ grosse Oberfläche eines Schlammstreifens kann das darin enthaltene Wasser in der Trocknungskammer schnell entweichen.

Diese Anlage weist den Nachteil auf, dass sie nur dann leistungsfähig arbeiten kann, wenn eine Vielzahl von Extrudern nebeneinander angeordnet sind, so dass eine Vielzahl von Schlammstreifen gleichzeitig auf den Rost ausgegeben werden können. Da die Extruder nicht beliebig klein gebaut werden können, ist durch diese Konstruktion zwangsläufig ein relativ grosser Abstand zwischen den einzelnen Schlammstreifen vorgegeben, was bewirkt, dass die Trocknungskammer abmessungsmässig entsprechend gross dimensioniert sein muss, wobei entsprechende Wärmeverluste zwangsläufig auftreten, was dem Wirkungsgrad der Anlage zuwiderläuft. Es sind im weiteren relativ aufwendige Mittel, wie die Widerlageplatte und die Mühle erforderlich, damit mit der Anlage getrocknete Schlammstücke mit annähernd gleicher Grösse erhalten werden können.

Es ist die Aufgabe der vorliegenden Erfindung, eine Trocknungsanlage ohne die obengenannten Nachteile zu schaffen. Die Anlage soll insbesondere mit weniger in die Trocknungskammer geführter Heizenergie pro Zeiteinheit mehr Schlamm trocknen, und soll derart gestaltet sein, dass der Ausstoss an getrockneten Schlammstücken bei einer bestimmten Trocknungskammergrösse grösser ist. Die Anlage soll getrocknete Schlammstücke gleichmässiger Grösse ohne das aufwendige Anordnen einer Mühle an der Ausgabeöffnung der Trocknungskammer ausgeben können.

Erfindungsgemäss wird diese Aufgabe dadurch gelöst, dass sich die Eingabevorrichtung für den zu trocknenden Schlamm im wesentlichen quer zur Förderrichtung über die ganze Breite der Fördereinrichtung erstreckt, dass die Ausgabeöffnungen unmittelbar nebeneinanderliegen, in mindestens einer Reihe angeordnet sind, welche sich ebenfalls über die ganze Breite der Fördereinrichtung erstreckt und dass die Eingabevorrichtung mindestens ein Unterbrechungselement zum periodischen Unterbrechen des durch die Ausgabeöffnungen austretenden Schlammes aufweist.

Die Ausgabeöffnungen, die in mindestens einer Reihe an der Eingabevorrichtung angeordnet sind und die unmittelbar nebeneinanderliegen, bewirken, dass der zu trocknende Schlamm über die ganze Breite der Fördereinrichtung verteilt auf die Auflagefläche ausgegeben werden kann. Es ist mit dieser Eingabevorrichtung möglich, die einzelnen Schlammstreifen sehr nahe nebeneinander anzuordnen, so dass aber gleichwohl zwischen jedem Schlammstreifen genügend Zwischenraum ist, dass das im zu trocknenden Schlamm vorhandene Wasser allseitig entweichen kann. Die Menge des zu trocknenden Materials, das durch die erfindungsgemässe Anlage durchgesetzt werden kann, ist gross und entsprechend gross ist ebenfalls die mit der Anlage erzielbare Leistung. Mit dem mindestens einen Unterbrechungselement können die Ausgabeöffnungen, entweder alle zusammen oder gestaffelt, periodisch mindestens teilweise verschlossen werden. Durch die Ausgabeöffnungen werden dadurch nicht endlose Schlammstreifen ausgegeben, sondern sogenannte Pellets, d.h. kleine Schlammstücke. Gegenüber endlosen Schlammstreifen hat dies den Vorteil, dass, ohne dass spezielle Vorkehrungen getroffen werden müssen, die Oberfläche eines Schlammstückes gross und damit das Entweichen des Wassers beim Trocknen eines Pellets beschleunigt wird. Je nach der Grösse der Ausgabeöffnungen und je nach der Periodendauer, mit der die Ausgabeöffnungen verschlossen werden sowie je nach der Leistung der Beschickungspumpe kann die Grösse der Pellets variiert werden. Eine einzige Beschickungspumpe genügt, um durch alle Ausgabeöffnungen Schlamm auszugeben. Der gegenseitige Abstand der Ausgabeöffnungen ist derart, dass die einzelnen nebeneinanderliegenden Pellets nicht aneinander anliegen können. Je nach dem Anfangsfliessverhalten des Schlammes ist dieser Abstand entsprechend zu wählen.

Als Unterbrechungselement kann beispielsweise ein plattenförmiger Schieber vorgesehen werden, der an einer Wand der Eingabevorrichtung, in welcher die Ausgabeöffnungen angeordnet sind, anliegt und der zum Verschliessen der Ausgabeöffnungen relativ zur genannten Wand verschiebbar ist. Anstelle eines einzigen Schiebers können mehrere Schieber vorgesehen sein, beispielsweise einer für jede Ausgabeöffnung oder einer für eine Gruppe von Ausgabeöffnungen. Als Unterbrechungselement kann ebenfalls eine rotative Anordnung vorgesehen sein. Es ist denkbar, dass auf einer sich drehenden Trommel, deren Drehachse parallel zur Reihe der Ausgabeöffnungen verläuft, Verschlussbleche oder Verschlussbalken derart angeordnet sind, dass beim Drehen der Trommel die Ausgabeöffnungen periodisch verschlossen werden. Die Bleche oder Balken können auf der Trommel parallel zur Drehachse verlaufen, damit alle Ausgabeöffnungen gleichzeitig verschliessbar sind, oder sie können spiralförmig verlaufen, womit ein gestaffeltes Verschliessen der Ausgabeöffnungen möglich wird. Das gestaffelte Verschliessen hat den Vorteil, dass in der Eingabevorrichtung keine Druckschwankungen auftreten. Anstelle von einer Trommel können auch mehrere nebeneinanderliegende Trommeln vorgesehen sein.

Anstelle von einer Reihe von Ausgabeöffnungen, die unmittelbar nebeneinanderliegen, können auch mehrere Reihen vorgesehen sein. Die Ausgabeöffnungen sind jedoch immer so gegeneinander versetzt, dass die auf die Auflagefläche der Fördereinrichtung ausgegebenen Schlammstücke einlagig und voneinander leicht beabstandet sind.

Bevorzugt ist vorgesehen, dass die Eingabevorrichtung ein Schneidwerk umfasst, das mit der ersteren lösbar verbunden ist, wobei die Ausgabeöffnungen und das mindestens eine Unterbrechungselement am Schneidwerk angeordnet sind. Es ist dadurch möglich, die Ausgabeöffnungen und das Unterbrechungselement der jeweiligen Schlammart in der Form und/oder in der Grösse anzupassen, so dass eine optimale Schlammabgabe erreicht werden kann. Vorteilhaft ist ebenfalls, dass das Schneidwerk zum Reinigen bequem entfernbar und wiederum in die Eingabevorrichtung der Anlage einsetzbar ist.

Das Schneidwerk umfasst vorteilhafterweise im wesentlichen zwei Teile. Einen ersten ruhenden Teil, an dem die Ausgabeöffnungen angeordnet sind und einen zweiten Teil mit dem mindestens einen Unterbrechungselement, wobei der zweite Teil relativ zum ersten Teil bewegbar ist und wobei durch die fortgesetzte Bewegung des zweiten Teiles die Ausgabeöffnungen periodisch verschliessbar sind. Vorteilhafterweise ist der erste Teil als rohrförmiger Stator mit einem kreisringförmigen Querschnitt ausgeführt. Im Mantel des Statorrohres sind die Ausgabeöffnungen auf einer Mantellinie liegend im wesentlichen vom einen Rohrende bis zum anderen Rohrende angeordnet. Der zweite Teil ist vorteilhafterweise ein im rohrförmigen Stator drehbarer Rotor, an welchem das mindestens eine Unterbrechungselement montiert ist.

Im Mantel des Stators sind den Ausgabeöffnungen im wesentlichen gegenüberliegend weitere Öffnungen zum Eintritt des Schlammes in das Rohr bzw. in das Schneidwerk vorhanden.

Die derart ausgeführte Konstruktion hat den Vorteil, dass sowohl das ganze Schneidwerk von der Eingabevorrichtung getrennt und durch ein anderes mit anderen Eigenschaften ersetzt werden kann oder nach einer Reinigung wieder montiert werden kann. Der Rotor kann eines oder mehrere Unterbrechungselemente bzw. Unterbrechungsbleche oder Unterbrechungsbalken aufweisen, so dass bei einer Umdrehung des Rotors die Ausgabeöffnungen einmal oder mehrere Male unterbrochen werden. Je nach Schlammart können verschiedene Rotore in den Stator eingeschoben werden. Die Variationsmöglichkeiten von Rotoren mit verschiedenen Unterbrechungselementen und Statoren mit verschieden geformten und unterschiedlich angeordneten Ausgabeöffnungen sind unbegrenzt vorhanden. Die Verschlussdauer der Ausgabeöffnungen und die Periodendauer kann durch die Drehzahl des Rotors verändert werden.

Je nach der Ausbildung der Unterbrechungselemente, beispielsweise als starre Verschlussbalken mit einem rechteckförmigen Querschnitt, kann vorgesehen sein, dass nicht die ganze Ausgabeöffnung verschlossen wird, sondern lediglich ein Bereich davon, der sich durch die Drehung des Rotors über die Ausgabeöffnung fortbewegt. Tests haben gezeigt, dass dies genügt, um den ausgegebenen Schlamm in Pellets zu trennen.

Vorteilhafterweise umfasst die Eingabevorrichtung ein Gehäuse, das einen Eingang hat, der mit der Beschickungspumpe über eine Förderleitung verbunden ist und das sich fächerförmig zur Breite der Fördereinrichtung ausbreitet, wobei das breite Ende des Gehäuses dem flussaufwärts gelegenen Ende der Fördereinrichtung zugewandt ist und wobei an diesem Ende das Schneidwerk seitlich in das Gehäuse einschiebbar ist. Es könnten selbstverständlich ebenfalls Konstruktionen vorgesehen sein, um das Schneidwerk entgegengesetzt zur Förderrichtung der Fördereinrichtung an die Eingabevorrichtung anzubauen.

Die Ausgabeöffnungen sind je nach der Schlammart entweder rund oder schlitzförmig angeordnet, wobei im letzteren Fall die Schlitze etwa parallel zur Auflagefläche ausgerichtet sind.

Als weiterer Vorteil hat sich erwiesen, dass zwischen der Beschickungspumpe und der Eingabevorrichtung eine Vorheizeinrichtung zum Vorheizen des Schlammes eingefügt ist. Damit kann eine für den Trocknungsprozess notwendige optimale Konsistenz des Schlammes erreicht werden. Die Vorheizeinrichtung kann dabei mit Wärme, die aus dem Heissdampf der Trocknungskammer zurückgewonnen wird, oder die aus Brennerabgasen zurückgewonnen wird, betrieben sein.

Die Fördereinrichtung ist vorteilhafterweise als Bandförderer mit einem umlaufenden Endlosband ausgeführt. Dieses ist vorzugsweise als Maschenband oder Kettenband aus chemikalienbeständigem Edelstahl hergestellt.

Das mindestens eine Heizelement zum Beheizen der Trocknungskammer kann eine getrennte Brennkammer sein, wobei die Brennkammer und die Trocknungskammer über eine hitzebeständige wärmeleitende Wand, vorzugsweise aus Stahl oder Edelstahl miteinander verbunden sind. An der Brennkammer können zum Heizen eine oder mehrere Wärmequellen angeordnet sein.

Einen besseren Wirkungsgrad mit der Anlage hat man erreicht, wenn mindestens ein Heizelement, vorzugsweise mehrere Heizelemente, die als Heizrohre ausgeführt sind, in der Trocknungskammer direkt angeordnet sind. Jedes Heizrohr ist dabei mit einer Wärmequelle verbunden.

Es hat sich als wesentlich erwiesen, dass die Wärme in der Trocknungskammer im Bereich anschliessend an die Ausgabeöffnungen möglichst gross ist. Durch eine entsprechend enge Anordnung der Heizrohre, die im genannten Bereich etwa auf 600 - 1000 ° C aufgeheizt werden, wird eine Hochtemperaturzone gebildet. Die Wärme wird dort von den Heizrohren in Form von Strahlung und Konvektion abgegeben. Die Oberfläche des zu trocknenden Schlammes wird dadurch praktisch schockartig mit einer Kruste versehen. Jedem einzelnen Pellet wird somit eine Stabilität gegeben, die ein nachträgliches Auseinanderfallen und eine Staubbildung verhindert. In dem der Hochtemperaturzone anschliessenden Bereich können die Heizrohre weiter auseinanderliegend angeordnet sein. Es wird dort zum fortgesetzten Trocknen der Pellets lediglich noch eine Temperatur von 400 - 700 ° benötigt. Die Heizrohre sind in diesem zweitgenannten Bereich deshalb nicht mehr so stark erwärmt. Die Wärmeübertragung erfolgt lediglich noch durch Konvektion. Zum Bilden der Hochtemperaturzone sind vorteilhafterweise auch alle Wärmequellen in diesem Hochtemperaturbereich angeordnet.

Anstelle von geraden Heizrohren können diese als Heizschlangen ausgebildet und im wesentlichen U-förmig gebogen sein. Die Schenkel der Heizschlangen erstrecken sich dabei vorzugsweise quer zur Förderrichtung der Pellets.

Als Wärmequellen können Gasbrenner, Ölbrenner und/oder Heissgase und/oder Heissdampf eingesetzt werden. Die beiden letzteren können mittels Wärmerückgewinnung aus dem Schlammtrocknungsprozess erzeugt werden. So kann beispielsweise vorgesehen sein, dass Öl- oder Gasbrenner lediglich in der Hochtemperaturzone vorgesehen sind und dass die Wärme in der Niedertemperaturzone durch Wärmerückgewinnung erzeugt wird.

Bisher ist immer von zu trocknendem Schlamm die Rede gewesen. Schlamm ist dabei als allgemeiner Ausdruck eines zu trocknenden Produktes zu verstehen, welches z.B. eine Melasse aus der Lebens- oder Futtermittelindustrie oder einer anderen Industrie sein kann oder ein Slurry aus der Kosmetik- oder Seifenindustrie umfassen kann. Getrocknet werden können natürlich Schlämme aus kommunalen und industriellen Abwässern. Die Anlage eignet sich ebenfalls zum Trocknen von mit einer Flüssigkeit durchtränkten pulverförmigen oder pulverähnlichen Produkten und Nebenprodukten aus industriellen Prozessen, wie Aktivkohle, Abfallprodukte aus der Tee- und Kaffeeproduktion. Ebenso können als zu trocknender Schlamm auch andere, vorgängig nicht aufgezählte Produkte verstanden werden.

Das Trockengut verlässt die Verdampfungskammer mit einem Trockensubstanzgehalt von 80 - 98 %. Der gewünschte Trockensubstanzgehalt kann mittels der zugeführten Heizenergie und/oder einer gewählten Fördergeschwindigkeit der Fördereinrichtung eingestellt oder gesteuert werden. Mehrere erfindungsgemässe Anlagen können nebeneinandergestellt oder übereinander angeordnet und zu einem Bandtrocknersystem zusammengefasst sein.

Bevorzugte Ausführungsformen der erfindungsgemässen Anlage sind nachstehend mit Bezugnahme auf Figuren näher beschrieben. Es zeigen
Fig. 1 eine schematische Darstellung eines ersten Ausführungsbeispieles einer erfindungsgemässen Anlage,
Fig. 2 ein weiteres Beispiel lediglich einer Trocknungskammer mit einer angebauten Eingabevorrichtung für eine Anlage gemäss der Fig. 1,
Fig. 3 die Eingabevorrichtung für eine Anlage gemäss den Fig. 1 und 2 in einer vergrösserten Darstellung als Aufsicht,
Fig. 4 einen Schnitt gemäss der Linie 4-4 durch die Eingabevorrichtung der Fig. 3,
Fig. 5A bis 5C verschiedene Ansichten eines Stators von einem Schneidwerk der Eingabevorrichtung gemäss den Fig. 3 und 4, wobei Fig. 5A eine Ansicht des Stators von der Seite der Schlammzufuhr her ist, Fig. 5B eine Ansicht des Stators von der Seite der Ausgabeöffnungen her ist, Fig. 5C einen Schnitt durch das Statorrohr darstellt,
Fig. 6A bis 6E verschiedene Ansichten und Details eines Rotors, der im Schneidwerk der Eingabevorrichtung gemäss den Fig. 3 und 4 im Stator drehbar angeordnet ist, wobei Fig. 6A eine Aufsicht auf den Rotor ist, Fig. 6B lediglich die Rotorwelle in einer gegenüber der Fig. 6A um 90° gedrehten Stellung ist, Fig. 6C, 6D die Seitenansicht und die Vorderansicht eines Mitnehmers des Rotors für Unterbrechungselemente, Fig. 6E die Seitenansicht der Lageranordnung eines Rotorendes darstellt, und
Fig. 7 eine schematische Darstellung einer zweiten Ausführungsform einer erfindungsgemässen Anlage.

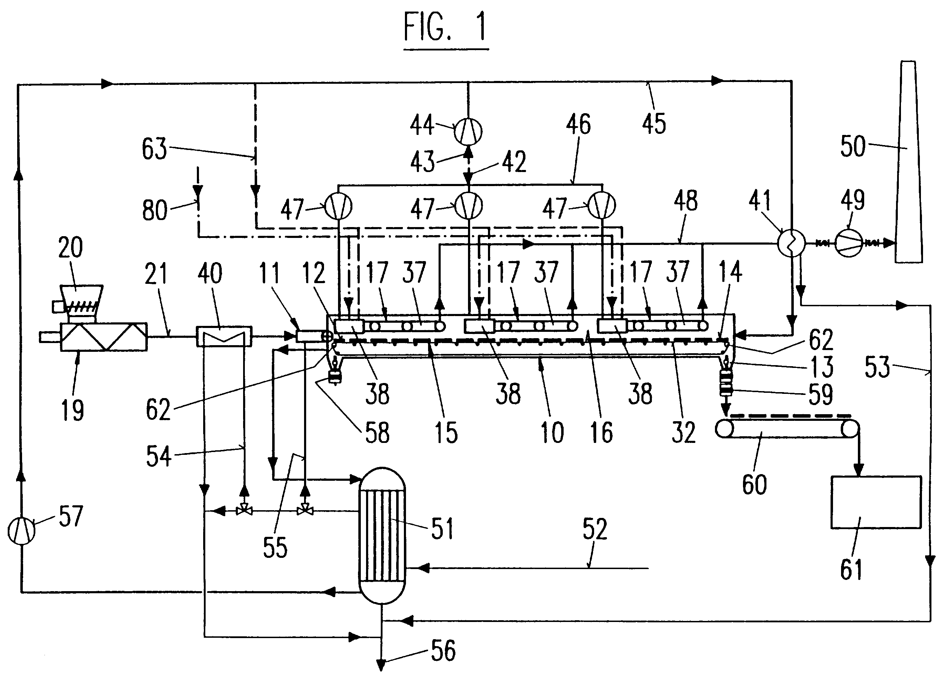

In der Fig. 1 ist ein erstes Ausführungsbeispiel einer erfindungsgemässen Anlage zum Trocknen von Schlamm dargestellt. Die Anlage umfasst eine Trocknungskammer 10, in welcher eine Fördereinrichtung 15 angeordnet ist. Im gezeigten Ausführungsbeispiel ist dies ein Bandförderer mit einem über Antriebs- bzw. Umlenkrollen 62 umlaufenden, endlosen Maschen- oder Kettenband 32, vorzugsweise aus Edelstahl. Am flussaufwärts gelegenen Ende der Fördereinrichtung 15 ist eine Eingabevorrichtung 11 für die Eingabe des zu trocknenden Schlammes in die Trocknungskammer vorgesehen. Diese weist Ausgabeöffnungen auf, durch welche der zu trocknende Schlamm 12 austritt und auf den eine Auflagefläche 16 bildenden oberen Trum der Fördereinrichtung 15 in der Form von aneinandergereihten Pellets abgelegt wird. Der genannten Auflagefläche gegenüberliegend ist mindestens ein Heizelement 17 angeordnet. Es können sich aber mehrere Heizelemente 17 längs des Bandförderers erstrecken, verteilt von der Eingabevorrichtung 11 bis zu einer Entladeöffnung 13, die am flussabwärts gelegenen Ende des Bandförderers gelegen ist und durch welche die getrockneten Schlammstücke 14 die Trocknungskammer 10 verlassen können. Jedes der Heizelemente 17 weist je ein schlangenförmig gebogenes Heizrohr 37 auf, dessen eines Ende mit einer Wärmequelle, hier einem Öl- oder Gasbrenner 38, verbunden ist. Das andere Ende von jedem der Heizrohre mündet in ein gemeinsames Abluftrohr 48, das seinerseits über einen Rauchgaswärmetauscher 41 und über einen bezüglich der Heizrohre eine Saugwirkung erzeugenden Ventilator 49 in einen Kamin 50 mündet. Die Brenner 38 sind über je einen eine Druckwirkung erzeugenden Ventilator 47 mit einer Frischluftzufuhrleitung 46 verbunden. Diese Leitung mündet in einen gemeinsamen Frischlufteinlass 42. Versorgt werden die Brenner 38 über eine Brennstoffzufuhrleitung 80, entweder mit Öl oder mit Gas. Mittels den eine Druckwirkung erzeugenden Ventilatoren 47 und dem eine Saugwirkung erzeugenden Ventilator 49 kann die mit den Brennern 38 erhitzte Luft problemlos auch durch lange Heizrohre gefördert werden. Mittels einer weiteren Luftzufuhrleitung 63 kann anstelle von Frischluft ein Anteil von Prozessluft erhitzt und durch die Heizrohre 37 geschickt werden. Die weitere Luftzufuhrleitung 63 mündet in eine Leitung 45, mit welcher ein geschlossener Prozessluftkreislauf, der weiter hinten beschrieben ist, erstellt ist. Die Eingabevorrichtung 11 ist über eine Förderleitung 21 mit einer Beschickungspumpe 19 verbunden. Diese weist eine Zuführöffnung 20 für den zu trocknenden Schlamm auf und umfasst im wesentlichen einen Schneckenförderer, mit welchem der zu trocknende Schlamm über die Förderleitung 21 der Eingabevorrichtung 11 zugeführt wird. In der Förderleitung 21 ist ein Schlammwärmetauscher 40 angeordnet, mit welchem der zu trocknende Schlamm vorgeheizt wird. Der Schlamm-Wärmetauscher 40 arbeitet mit Wärme, welche diesem über eine Heisswasserzufuhrleitung 54 zugeführt wird. Das Heisswasser stammt aus einem Kondensator 51, in welchem die Prozessluft gekühlt wird. Das über den Schlammwärmetauscher 40 geführte Wasser ist mit einer Abwasserleitung 56 verbunden. Zum Kühlen der Prozessluft wird dem Kondensator 51 Kühlwasser 52 zugeführt. Durch das Vorheizen des Schlammes erhält dieser die notwendige Konsistenz, so dass er durch die Eingabevorrichtung 11 in geeigneter Form, praktisch fliessfest, auf die Auflagefläche 16 der Fördereinrichtung 15 ausgegeben werden kann.

Die Entladeöffnung 13 an der Trocknungskammer 10 ist mit einer Ausgangsschleuse 59 verbunden. Durch diese gelangen die getrockneten Schlammstücke auf eine weitere Fördereinrichtung 60, im gezeigten Ausführungsbeispiel ebenfalls ein Bandförderer, welcher die Schlammstücke in ein Lagersilo 61 zur Weiterverwendung transportiert.

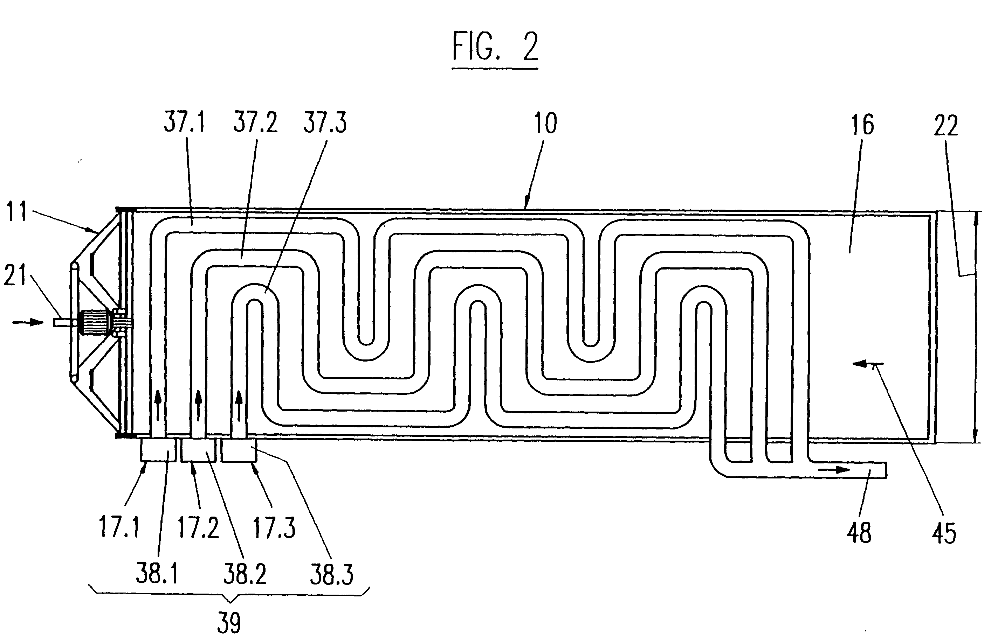

Der geschlossene Prozessluftkreislauf, der wie bereits vorerwähnt durch die Leitung 45 gebildet ist, ist wie folgt aufgebaut: Relativ kalte Luft wird dem Rauchgaswärmetauscher 41 zugeführt und dort unter gleichzeitiger Abkühlung der in der Abluftleitung 48 geführten Rauchgase erhitzt. Die erhitzte und trockene Luft wird dann auf der flussabwärts gelegenen Seite der Fördereinrichtung 15 in die Trocknungskammer 10 geführt und durchströmt diese entgegen der Förderrichtung des zu trocknenden Schlammes. In der Fig. 2 ist dies mit einem Pfeil 45 gekennzeichnet. Beim Durchströmen der Trocknungskammer 10 wird die Luft weiter erhitzt und mit Feuchtigkeit, die von dem zu trocknenden Schlamm stammt, gesättigt. Die Luft verlässt die Trocknungskammer 10 auf der flussaufwärts gelegenen Seite. Die Prozessluftleitung 45 führt nun die heisse, mit Wasser gesättigte Luft dem Kondensator 51 zu. Dort wird die Luft gekühlt und das dabei austretende Wasser gelangt zur Abwasserleitung 56. Die nunmehr wieder kühle Luft gelangt über einen weiteren Ventilator 57 wiederum zum Rauchgaswärmetauscher 41. Zwischen dem Ventilator 57 und dem Rauchgaswärmetauscher 41 ist ein zusätzlicher Ventilator 44 angeordnet, mit welchem bei Bedarf Frischluft 43 in den Prozessluftkreislauf eingespiesen werden kann. Dies vor allem dann, wenn über die Abzweigung der bereits genannten Leitung 63 ein Anteil der Prozessluft den Heizelementen 17 zugeführt wird. Zum Abführen von Kondenswasser aus dem Rauchgaswärmetauscher 41 ist dieser über eine Kondensatorabfuhrleitung 53 mit der Abwasserleitung 56 verbunden.

Der vorentwässerte Schlamm, dessen Wassergehalt der Eigenschaft des jeweilig zu trocknenden Produktes angepasst ist, wird mittels der Beschickungspumpe 19 über den Schlammwärmetauscher 40 mit einem Druck von etwa 2 - 10 bar in die Eingabevorrichtung 11 geleitet. Zum Ausgeben des zu trocknenden Schlammes von der Eingabevorrichtung 11 auf die Auflagefläche 16 des Bandförderers 15 weist die Eingabevorrichtung Ausgabeöffnungen auf, die weiter hinten beschrieben sind. Der zu trocknende Schlamm wird mit einem Beschickungsdruck von ca. 0,1 - 1 bar durch die Ausgabeöffnungen auf den Bandförderer ausgegeben. Durch Unterbrechungselemente, die die Ausgabeöffnungen periodisch verschliessen, und die ebenfalls weiter hinten beschrieben sind, erfolgt die Schlammausgabe in Form von einzelnen gepressten Pellets oder in Form einer Art gepressten Granulates.

Diese Pellets bzw. Granulate durchlaufen die Trocknungskammer und werden dabei erhitzt. Dies mit den vorzugsweise über der Auflagefläche installierten Heizelementen. Gleichzeitig durchsetzt der heisse Luftstrom der Prozessluft die Trocknungskammer in der Gegenrichtung der Förderrichtung der Pellets oder der Granulate.

Die Aufenthaltszeit des zu trocknenden Produktes in der Trocknungskammer hängt von der Geschwindigkeit des Förderbandes und von der Länge der Trocknungskammer ab. Sie beträgt je nach Art des zu trocknenden Schlammes und dem gewünschten Endtrockensubstanzgehalt zwischen 8 - 30 min.

Das aus dem zu trocknenden Schlamm entweichende Wasser wird in Form von heisser gesättigter Luft und Dampf über den Kondensator 51 geleitet. Durch indirekten Kontakt mit dem Kühlwasser wird die Kondensation der in der Luft enthaltenen Feuchtigkeit und des Dampfes bewirkt. Das erwärmte Kühlwasser wird zwecks Wärmerückgewinnung über den der Eingabevorrichtung vorgeschalteten Schlammwärmetauscher geführt. Die Verdampfung des aus dem zu trocknenden Schlamm entweichenden Wassers erfolgt bei einem leichten Unterdruck. Dampfemissionen aus der Anlage werden so ausgeschlossen. Zugleich wird die Temperatur des zu trocknenden Schlammes niedrig gehalten.

Der getrocknete Schlamm wird am Ende der Trocknungskammer mit einem Trockensubstanzgehalt von 80 - 99 % über die Entladeöffnung und über die Austrittsschleuse auf den weiteren Förderer ausgegeben. Dort werden die Pellets, bevor Sie dem Lagersilo oder einem Container zugeführt werden, weiter abgekühlt.

Einzelne Anlageteile, wie beispielsweise Trocknungskammer oder Trocknungskammer mit Beschickungspumpe, können aufeinander oder nebeneinander angeordnet, derart zusammengefasst werden, dass ein Trocknungssystem mit mehreren Trocknungsstrassen entsteht.

In der Fig. 2 ist eine weitere Ausführung einer Trocknungskammer 10 schematisch dargestellt. Mit 16 ist die Auflagefläche oder das obere Trum der Fördereinrichtung gekennzeichnet. In der Figur auf der linken Seite ist die Eingabevorrichtung 11 an die Trocknungskammer 10 angebaut. Sichtbar ist dort ebenfalls ein Stück der Förderleitung 21, durch die der Schlamm an die Eingabevorrichtung zugeführt und von dieser auf die Auflage 16 der Fördereinrichtung ausgegeben wird. Diese befördert den zu trocknenden Schlamm unter dem ersten 37.1, dem zweiten 37.2 und dem dritten 37.3 Heizrohr hindurch zu der in dieser Figur nicht sichtbaren Entladeöffnung, die auf der gegenüberliegenden Seite der Eingabevorrichtung 11 an der Trocknungskammer 10 angeordnet ist. Im Gegensatz zur Trocknungskammer beim erstgenannten Ausführungsbeispiel, wo drei identische Heizelemente 17 mit Heizrohren 37 und Wärmequellen 38 in der Förderrichtung über die ganze Länge der Trocknungskammer verteilt angeordnet sind, sind hier die drei Wärmequellen 38.1, 38.2, 38.3 der drei Heizelemente 17.1, 17.2, 17.3 unmittelbar anschliessend an die Eingabevorrichtung 11 vorhanden. Es wird dadurch erreicht, dass in einem Bereich 39 der Fördereinrichtung, der an die Eingabevorrichtung 11 anschliesst, eine höhere Temperatur erzielt werden kann als im übrigen Bereich der Trocknungskammer. Es wird auf diese Weise die in der Beschreibungseinleitung genannte Hochtemperaturzone gebildet. Mit dem Bezugszeichen 45 ist die Strömungsrichtung der Prozessluft angedeutet, die der Förderrichtung des Bandförderers entgegenläuft. Das den Wärmequellen 38.1, 38.2, 38.3 abgewandte Ende von jedem Heizrohr 37.1, 37.2, 37.3 ist zur gemeinsamen Abluftleitung 48 zusammengefasst. In dieser Figur sehr schön sichtbar ist, dass sich die Eingabevorrichtung 11 quer zur Förderrichtung über die ganze Breite 22 der Trocknungskammer 10 und des Bandförderers 15 erstreckt. Es braucht nicht besonders erwähnt zu werden, dass die Wände der Trocknungskammer, vorzugsweise innen und aussen, mit einer Wärmeisolierung versehen sind. Als Variante könnte vorgesehen sein, zwischen die Wärmeisolierungsschichten kühlbare Wände einzubauen, wobei diese mit Wasser von der kühleren Seite zur wärmeren Seite hin durchströmt würden. Das auf diese Weise erwärmte Wasser könnte als thermische Energie einer weiteren Nutzung zugeführt werden.

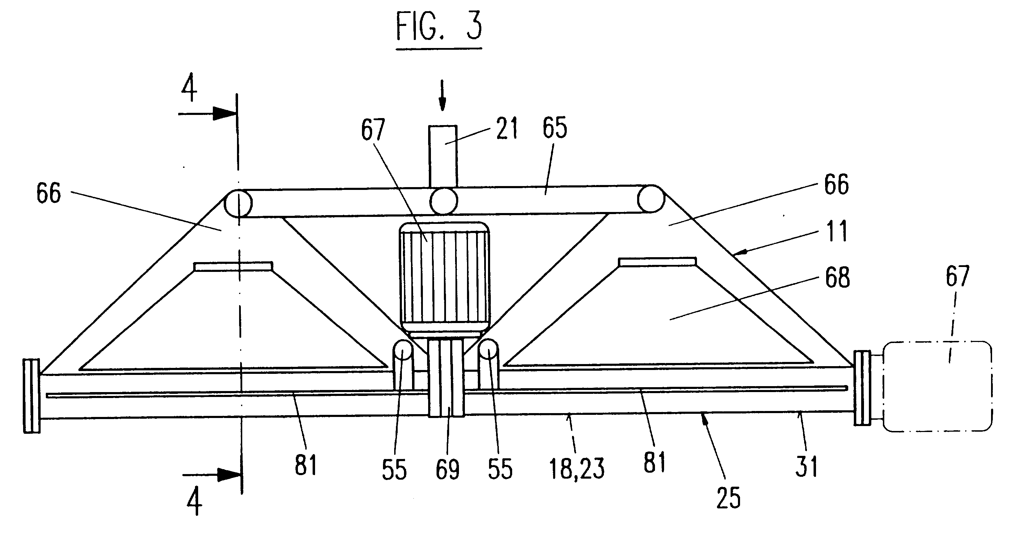

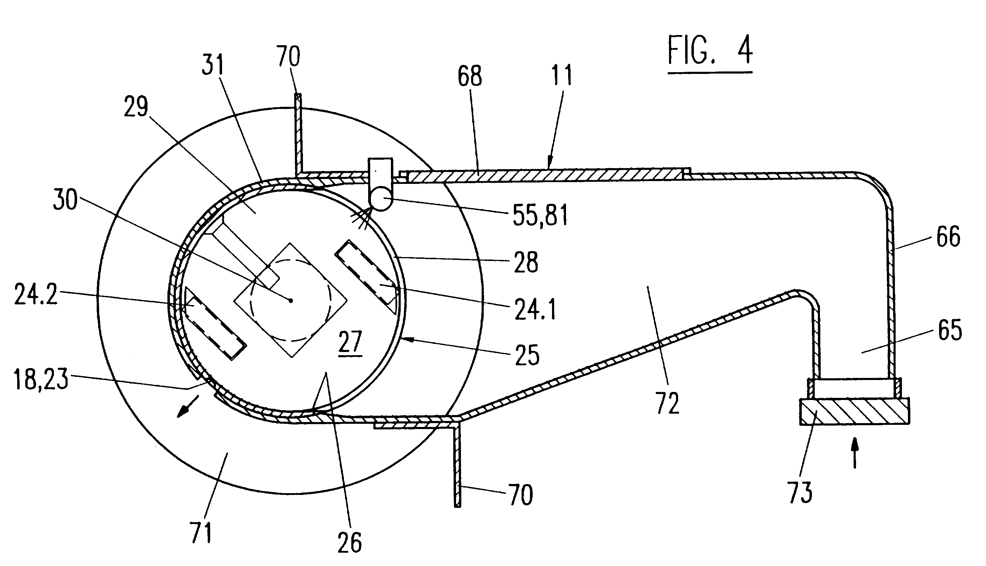

In der Fig. 3 ist eine Aufsicht auf die Eingabevorrichtung 11 vergrössert dargestellt. Von der Förderleitung 21 her gelangt der zu trocknende Schlamm in ein Schlammaufteilrohr 65. Der Schlamm wird dort in zwei Teilströme aufgeteilt, wobei je ein Teilstrom einem Schlammverteiler 66 zugeführt wird. Jeder Schlammverteiler weitet sich fächerförmig auf und schliesst an ein gemeinsames Schneidwerk 25 an, das, wie weiter hinten beschrieben, dazu vorgesehen ist, den Schlamm über die ganze Breite der Fördereinrichtung verteilt, in einer geeigneten Art auf die Auflagefläche der Fördereinrichtung auszugeben. Das Schneidwerk 25 weist dazu, gemäss einer weiter hinten folgenden Erklärung, Ausgabeöffnungen 18, die in einer Reihe 23 angeordnet sind, auf. Die Reihe 23 erstreckt sich über die ganze Länge des Schneidwerkes 25 bzw. über die ganze Breite der Fördereinrichtung. Das Schneidwerk, das dazu bestimmt ist, den Schlamm nicht als ununterbrochenen Streifen, sondern stückweise auf die Auflagefläche der Fördereinrichtung auszugeben, weist Unterbrechungselemente auf, die von einem Motor 67 über beispielsweise ein Schneckengetriebe 69 angetrieben sind. Die Eingabevorrichtung ist von einem Gehäuse 31 umschlossen. Deckel 68 sind an jedem Schlammverteiler 66 angeordnet, um bei Bedarf das Innere zu reinigen. Auf jeder Seite des durch das Schneckengetriebe 69 mittig unterbrochenen Schneidwerkes 25 sind Reinigungswasserzufuhrleitungen 55 vorgesehen. Diese münden in je eine Reinigungswasserleitung 81, die mit nicht dargestellten Auslassdüsen bestückt ist, womit ein Wasserstrahl direkt auf die in der Fig. 4 sichtbaren Ausgabeöffnungen 18 des Schneidwerkes 25 gerichtet ist. Vorzugsweise ist pro Schlammverteiler 66 eine Reinigungswasserleitung 81 vorhanden, die sich über die ganze Breite des entsprechenden Schlammverteilers erstreckt. Als Reinigungswasser wird Heisswasser ab dem Kondensator 51 (Fig. 1) abgezweigt.

Lediglich gestrichelt ist als weitere Ausführungsvariante eine andere Anordnung des Motors 67 angedeutet. Dieser ist auch stimseitig vom Schneidwerk 25 angeordnet. Anstelle eines Schneckengetriebes kann in beiden Beispielen ein anderes Untersetzungsgetriebe vorgesehen sein. Das Schneidwerk könnte sich dann einstückig in einer ununterbrochenen Ausführung von der einen Förderbandseite zur gegenüberliegenden Förderbandseite erstrecken.

Das Gehäuse der Eingabevorrichtung 11 ist vorzugsweise aus Edelstahl in einer geschweissten Ausführung für Betriebsdrücke, je nach Art und Konsistenz des zu trocknenden Produktes bis maximal 10 bar gebaut. Je nach der Breite des Schneidwerkes bzw. der Fördereinrichtung der Trocknungskammer können 1, 2 oder mehrere dreieckförmige Schlammverteiler nebeneinander angeordnet sein.

Die Funktionsweise der Eingabevorrichtung 11 und des bereits mehrere Male genannten Schneidwerkes ist besonders klar aus der Fig. 4 ersichtlich. Dort ist in einer geschnittenen Darstellung (Linie 4-4, Fig. 3) ein Schlammverteiler 66 dargestellt. In diesen mündet, versehen mit einer Verschraubung 73, ein Ende des Schlammaufteilrohres 65. Durch dieses Rohr gelangt der zu trocknende Schlamm zuerst in eine Kammer 72, die sich zum Schneidwerk 25 hin, wie bereits vorgängig beschrieben, in der Längsrichtung des Schneidwerkes fächerförmig ausweitet. Das Schneidwerk 25 ist vom Gehäuse 31 der Eingabevorrichtung umschlossen. Die Umschliessung wird vorzugsweise mit einem Edelstahlhalbrohr gemacht. Dieses weist über seine ganze Länge einen Schlitz auf, der so positioniert und dimensioniert ist, dass die in der Reihe 23 am Schneidwerk angeordneten Ausgabeöffnungen 18 für den Schlammaustritt freiliegen. Nahe unterhalb der Schlammaustrittsöffnungen 18, in der Fig. 4 nicht sichtbar, ist das flussaufwärts gelegene Ende der Fördereinrichtung 15 angeordnet.

An der Ober- und an der Unterseite des Gehäuses 31 sind Halterungselemente 70 für die Befestigung der Eingabevorrichtung angebracht.

Das Schneidwerk 25, das einen ersten ruhenden Teil 26, hier einen rohrförmigen Stator, in welchem die Ausgabeöffnungen 18 angeordnet sind, aufweist und das innerhalb dem Statorrohr einen relativ zum ersten ruhenden Teil bewegbaren zweiten Teil 27, hier ein drehbar gelagerter Rotor, der Unterbrechungselemente 24.1, 24.2 trägt, umfasst, hat die Aufgabe, vorentwässerten Schlamm in zylindrische oder plattenförmige Stücke umzuformen und diese dann durch die Ausgabeöffnungen 18 gleichmässig auf das Förderband der Fördereinrichtung auszutragen. Der zu trocknende Schlamm wird von der Kammer 72 durch weitere Öffnungen 28, die im Mantel des Statorrohres, im wesentlichen auf der den Ausgabeöffnungen 18 gegenüberliegenden Seite angeordnet sind, in das Statorrohr hineingepresst und dort durch den rotierenden Rotor 27 mit den daran angeordneten Unterbrechungselementen 24.1, 24.2 hindurch über die Ausgabeöffnungen 18 auf die Fördereinrichtung ausgegeben.

Als Unterbrechungselemente sind im gezeigten Ausführungsbeispiel Stangen 24.1, 24.2 mit einem rechteckförmigen Querschnitt vorgesehen. Eine Stangenkante ist dabei so nahe an der Innenwandung des rohrförmigen Stators 26 gelegen, dass durch das Drehen des Rotors 27 beim Vorbeistreichen dieser Kante an der Innenseite der Ausgabeöffnungen 18 diese vorübergehend teilweise verschlossen werden. Auf diese Art wird eine vorübergehende Unterbrechung des Schlammaustrittsstromes erzeugt. Das Resultat ist, dass der Schlamm, wie bereits gesagt, stückweise in Form von Pellets oder Granulaten auf das Förderband abgelegt wird.

Durch Verstellen der Umlaufgeschwindigkeit des Rotors und des durch die Beschickungspumpe erzeugten variablen Zulaufdruckes des zu trocknenden Schlammes kann die Länge der auf das Förderband gelangenden Schlammstücke bestimmt werden. Der Durchmesser bzw. die Breite und die Form der zu erzeugenden Schlammstücke ist durch die Öffnungsgrösse und Öffnungsform der im Statorrohr angeordneten Ausgabeöffnungen vorgesehen.

Mit dem Bezugszeichen 30 ist die Drehachse des Rotors 27 angedeutet. Mit 29 sind am Rotor angeordnete scheibenförmige Mitnehmer gekennzeichnet, von welchen die Stangen 24.1 und 24.2 getragen sind. Das Statorrohr 26 weist an seinen Enden Montageflansche 71 auf, von denen in der hier beschriebenen Figur lediglich einer sichtbar ist.

Die Konstruktion des Schneidwerkes 25 und des Gehäuses 31 der Eingabevorrichtung 11 ist vorzugsweise derart gewählt, dass das Schneidwerk 25, der Stator 26 und/oder der Rotor 27 zur Seite hin aus dem Gehäuse 31 herausgezogen werden können.

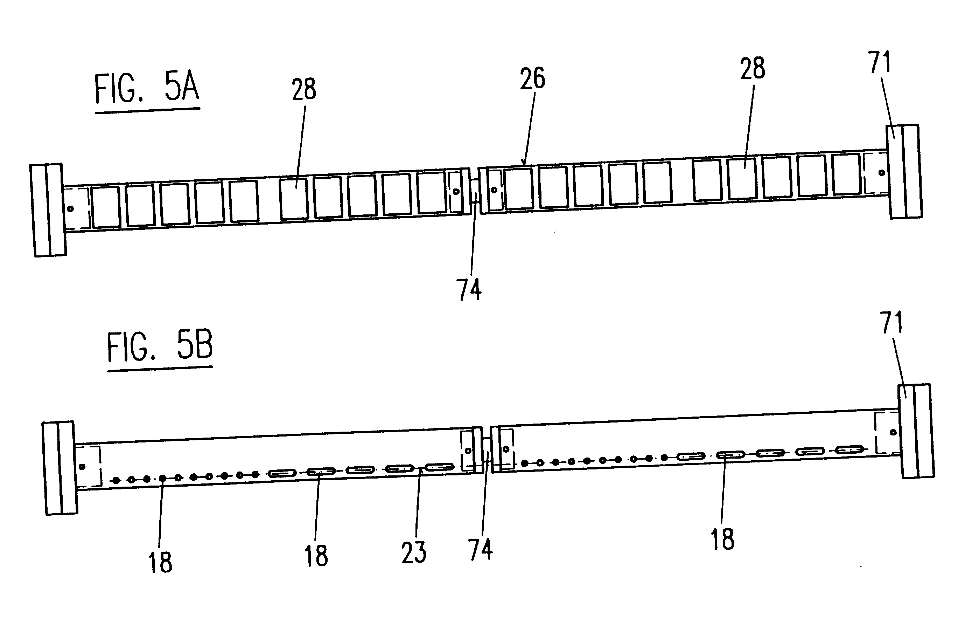

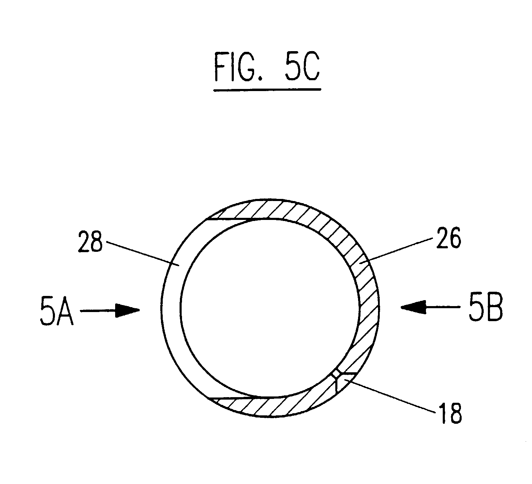

In den Fig. 5A, 5B und 5C ist der Stator 26 des Schneidwerkes dargestellt. Die Fig. 5C zeigt einen Schnitt durch das Statorrohr, wobei auf der einen Seite eine der Austrittsöffnungen 18 sichtbar ist und im wesentlichen auf der gegenüberliegenden Seite des Mantels eine der weiteren Öffnungen 28 angeordnet ist. Das Statorrohr 26 aus der Blickrichtung 5A in der Fig. 5C ist in der Fig. 5A sichtbar. Es ist für das gezeigte Ausführungsbeispiel zweiteilig aufgebaut. Es weist in der Mitte, wo gemäss den Figuren 2 und 3 das Schneckengetriebe angreift, eine Rohrverbindungseinrichtung 74 auf, die nicht näher beschrieben ist. Die weiteren Öffnungen 28, durch die der Schlamm in das Statorrohr eintritt, sind relativ grossflächig ausgeführt, so dass keine Eintrittsbehinderung entstehen kann.

In der Fig. 5B ist das Statorrohr aus der Blickrichtung 5B in der Fig. 5C dargestellt. Es sind hier erstmals alle Austrittsöffnungen 18 sichtbar, die sich in einer Reihe 23 unmittelbar nebeneinanderliegend über die ganze Länge des Statorrohres bzw. über die ganze Breite der Fördereinrichtung erstrecken. Die Ausgabeöffnungen können, je nach dem auszugebenden Schlamm, verschieden gross oder verschieden geformt sein. Sie können rund, oval, länglich oder sonstwie ausgebildet sein. Im gezeigten Ausführungsbeispiel sind sowohl runde als auch längliche Ausgabeöffnungen 18 dargestellt.

Das Statorrohr 26 ist mit den bereits genannten Flanschen 71, die links und rechts vorhanden sind, an der Eingabevorrichtung befestigt. Vorzugsweise wird ein Edelstahl rohr verwendet, das seitlich eng anliegend an das Gehäuse, in die Eingabevorrichtung eingeschoben ist.

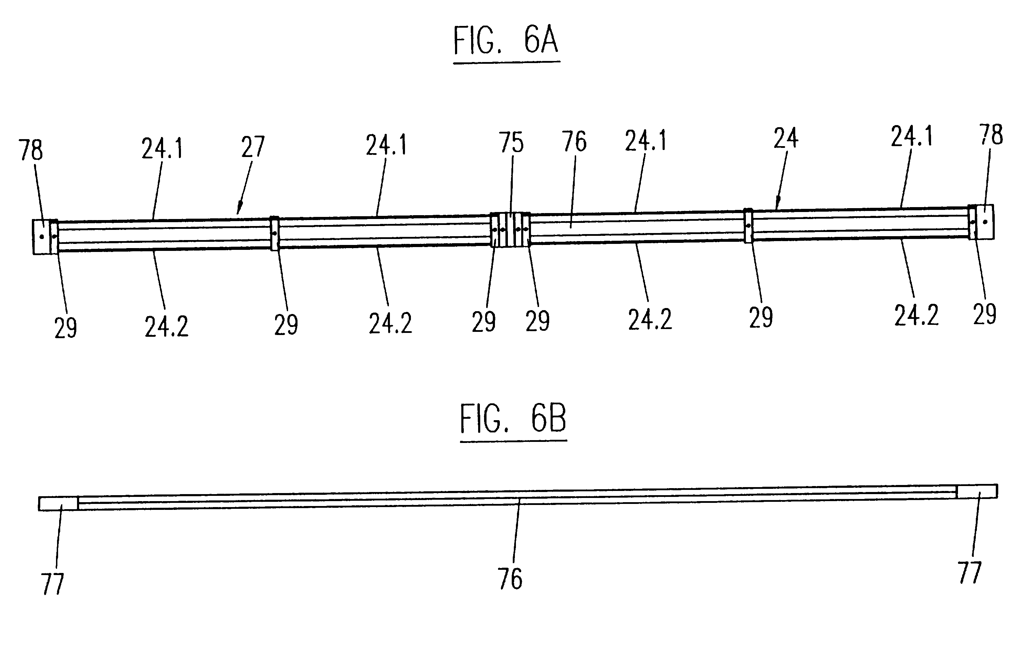

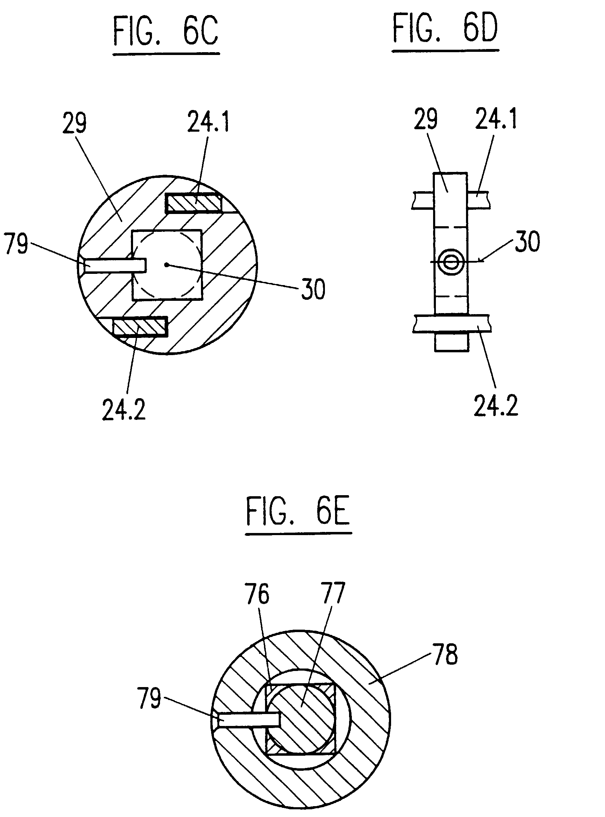

In den Fig. 6A bis 6E ist der Rotor 27 gezeichnet, der gemäss der Fig. 4 innerhalb dem Statorrohr 26 drehbar gelagert ist. Im gezeigten Ausführungsbeispiel umfasst der Rotor eine zentrale Welle 76, die einen quadratischen Querschnitt aufweist. Rechts und links der Welle sind Lagerzapfen 77 angeordnet, mit welchen die Wellenenden in einem Lagerflansch 78 gehalten und befestigt sind. Die Zapfen 77 können dabei mit dem Lagerflansch verschraubt, verstiftet, verkeilt oder mit einem anderen Befestigungselement 79 verbunden sein. Der äussere Durchmesser des Lagerflansches 78 ist als Gleitlager zum Drehen des Rotors innerhalb dem Statorrohr vorgesehen.

Mittig auf der Welle 76 ist ein Zahnrad 75 angeordnet, das mit der Schnecke des vorgenannten Schneckengetriebes zum Drehen des Rotors 27 innerhalb dem Stator 26 vorgesehen ist. Längs der Welle 76 sind scheibenförmige Mitnehmer 29 vorhanden und mit Befestigungselementen 79 mit der Welle verbunden. Die Mitnehmer tragen das mindestens eine Unterbrechungselement 24 und lassen dieses beim Rotieren der Welle mitdrehen. Im vorliegenden Ausführungsbeispiel sind als Unterbrechungselemente zwei starre Stangen 24.1, 24.2 mit einem rechteckförmigen Querschnitt vorhanden. Diese Stangen sind in den Mitnehmern 20 in entsprechend geformte Ausschnitte eingelegt und durch diese gehalten.

Andere Ausführungen des Rotors mit nur einer Stange, mit mehr als zwei Stangen, mit spiralförmig um den Kern angeordneten Stangen oder Blechen, usw., wären ebenfalls denkbar. Die einzelnen Teile des Stators sind vorzugsweise ebenfalls aus Edelstahl gefertigt.

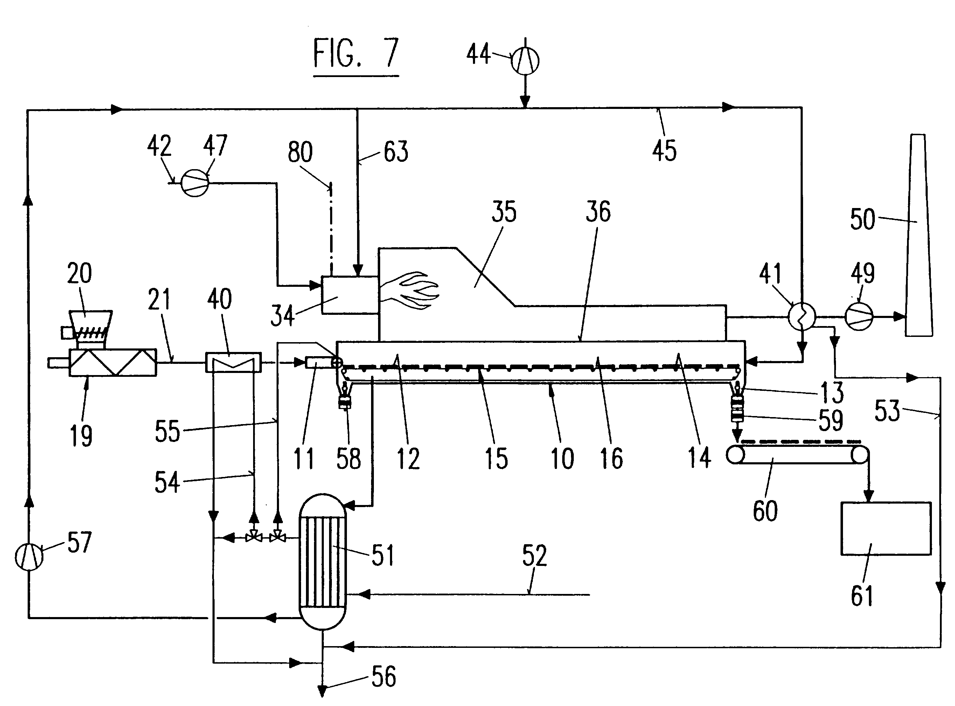

In der Fig. 7 ist ein weiteres Ausführungsbeispiel einer erfindungsgemässen Anlage schematisch dargestellt. Sie unterscheidet sich von dem in der ersten Figur beschriebenen Ausführungsbeispiel lediglich dadurch, dass als Heizelement keine in der Trocknungskammer 10 angeordneten Heizrohre verwendet werden, sondern dass dazu eine vorzugsweise auf der Oberseite der Trocknungskammer 10 aufliegende Brennungskammer 35 vorhanden ist. Mittels einer oder mehreren Wärmequellen 34 wird der Innenraum der Verbrennungskammer 35 erhitzt. Über eine gemeinsame Wand 36 der Trocknungskammer 10 und der Brennkammer 35 wird die in der letzteren erzeugte Wärme in die Trocknungskammer übertragen.

Je nach der Breite der Anlage, die grösser als 1 m sein kann, wird die Brennkammer mit einem bis vier Gas- oder Ölbrennern beheizt. Damit wird eine gleichmässige Erhitzung der zwischen der Trocknungskammer und der Brennkammer liegenden, hoch hitzebeständigen Wand 36, vorzugsweise eine Stahlplatte, erreicht. Die Brennkammer ist mit Wärmeisolierung von innen und aussen versehen. Die innere Isolationsschicht hat zugleich die Funktion einer Wärmeabstrahlung und einer Wärmepufferung. Ebenfalls hier ist es möglich, zwischen den Wärmeisolationsschichten kühlbare Wände, die von Wasser durchflossen werden, einzubauen.

Als Kondensator 51 wird vorzugsweise ein Rohrbündeltauscher mit geraden Glattrohren und ausziehbarem Bündel aus Edelstahl verwendet. Die Prozessluft strömt von unten nach oben, wo sie am Schluss noch über einen Tropfenabscheider geführt wird. Am Boden des Kondensators sammelt sich das Kondensat und wird über die Abwasserleitung abgeleitet. Das Kühlmedium wird im Gegenstromverfahren geleitet.

Der Rauchgaswärmetauscher 41 ist vorteilhafterweise ein Plattenwärmetauscher in schwerer, industrieller Stahlausführung. Er besteht aus mit geringem Zwischenraum angeordneten parallelen senkrechten Platten, zwischen denen die heissen bzw. kalten Luftströme winkelrecht zueinander an jeder Seite der Platte strömen.

Die Anlage wird vorzugsweise mit einer handelsüblichen speicherprogrammierbaren Steuerung gesteuert, welcher eine Prozessoptimierungssteuerung übergeordnet sein kann. Die Steuerung bzw. die Prozessoptimierungssteuerung ist nicht Gegenstand dieser Patentanmeldung.

## Patentansprüche

1. Anlage zum Trocknen von Schlamm, umfassend
eine Trocknungskammer (10) mit einer in die Trocknungskammer mündenden Eingabevorrichtung (11) für den zu trocknenden Schlamm (12) und mit einer Entladeöffnung (13) für den getrockneten Schlamm (14),
einer Fördereinrichtung (15) innerhalb der Trocknungskammer, welche sich in der Förderrichtung von der Eingabevorrichtung zur Entladeöffnung erstreckt, wobei die Fördereinrichtung eine Auflagefläche (16) für den Schlamm (12, 13) aufweist, welche gleichzeitig zum Fördern und Trocknen des Schlammes bestimmt ist,
mindestens ein Heizelement (17), das der Auflagefläche im wesentlichen gegenüberliegt, wobei der auf der Auflagefläche liegende Schlamm zwischen dem Heizelement und der Auflagefläche durchgeführt wird,
an der Eingabevorrichtung angeordnete, nebeneinanderliegende und nahe dem flussaufwärtsgelegenen Ende der Fördereinrichtung vorhandene Ausgabeöffnungen (18) für den Schlamm,
eine Beschickungspumpe (19) ausserhalb der Trocknungskammer mit einer Zuführöffnung (20) für den Schlamm und einer Förderleitung (21) zur Eingabevorrichtung,
dadurch gekennzeichnet, dass sich die Eingabevorrichtung (11) im wesentlichen quer zur Förderrichtung über die ganze Breite (22) der Fördereinrichtung (15) erstreckt, dass die Ausgabeöffnungen (18) unmittelbar nebeneinanderliegend in mindestens einer Reihe (23) angeordnet sind, welche sich ebenfalls über die ganze Breite (22) der Fördereinrichtung (15) erstreckt, und dass die Eingabevorrichtung (11) mindestens ein Unterbrechungselement (24) zum periodischen Unterbrechen des durch die Ausgabeöffnungen (18) austretenden Schlammes (12) aufweist.

2. Anlage nach Anspruch 1, dadurch gekennzeichnet, dass die Eingabevorrichtung (11) ein Schneidwerk (25) umfasst, welches mit der Eingabevorrichtung lösbar verbunden ist und dass die Ausgabeöffnungen (18) am Schneidwerk (25) angeordnet sind.

3. Anlage nach Anspruch 2, dadurch gekennzeichnet, dass das Schneidwerk (25) einen die Ausgabeöffnungen (18) enthaltenden ersten ruhenden Teil (26) umfasst und mindestens einen zweiten Teil (27) aufweist, der relativ zum ersten Teil (26) bewegbar ist, wobei durch die Bewegung des zweiten Teiles (27) die Ausgabeöffnungen (18) mindestens teilweise vorübergehend verschliessbar sind.

4. Anlage nach Anspruch 3, dadurch gekennzeichnet, dass der erste Teil ein rohrförmiger Stator (25) mit kreisringförmigem Querschnitt ist und dass der zweite Teil ein das mindestens eine Unterbrechungselement (24) aufweisender Rotor (27) ist, der im Stator (26) drehbar gelagert ist.

5. Anlage nach Anspruch 3 oder 4, dadurch gekennzeichnet, dass auf einer den Ausgabeöffnungen (18) im wesentlichen gegenüberliegenden Seite des ersten Teiles (26) weitere Öffnungen (28) zum Eintritt des Schlammes in das Schneidwerk (25) vorhanden sind.

6. Anlage nach Anspruch 4 oder 5, dadurch gekennzeichnet, dass das mindestens eine Unterbrechungselement (24) zwei Stangen (24.1, 24.2) umfasst, die an scheibenförmigen Mitnehmern (29) des Rotors (27) gehalten sind und die sich über die ganze Länge des Rotors erstrecken, dass die Stangen bezüglich der Drehachse (30) des Rotors symmetrisch verteilt angeordnet sind, derart, dass ein Teil der Oberfläche von jeder der Stangen beim Drehen des Rotors periodisch an den Ausgabeöffnungen (18) vorbeigeführt wird, wodurch die letzteren periodische mindestens teilweise verschliessbar sind.

7. Anlage nach einem der Ansprüche 2 bis 5, dadurch gekennzeichnet, dass die Eingabevorrichtung (11) ein Gehäuse (31) umfasst, wobei das Schneidwerk (25) in das Gehäuse einschiebbar ist.

8. Anlage nach einem der Ansprüche 1 bis 7, dadurch gekennzeichnet, dass die Ausgabeöffnungen (18) schlitzförmig ausgebildet sind und dass die Schlitze etwa parallel zur Auflagefläche (16) ausgerichtet sind.

9. Anlage nach einem der Ansprüche 1 bis 8, dadurch gekennzeichnet, dass die Fördereinrichtung ein Bandförderer (15) mit einem umlaufend antreibbaren Endlosband (32), vorzugsweise aus Edelstahl, ist.

10. Anlage nach einem der Ansprüche 1 bis 9, dadurch gekennzeichnet, dass zwischen der Beschickungspumpe (19) und der Eingabevorrichtung (11) eine Vorheizeinrichtung (33) zum Vorheizen des Schlammes eingefügt ist.

11. Anlage nach einem der Ansprüche 1 bis 10, dadurch gekennzeichnet, dass das mindestens eine Heizelement (17) eine mit mindestens einer Wärmequelle (34) aufheizbare Verbrennungskammer (35) ist, wobei die Verbrennungskammer und Trocknungskammer (10) aneinander anliegen und eine gemeinsame Trennwand (36) aus einem hitzebeständigen wärmeleitenden Material haben.

12. Anlage nach einem der Ansprüche 1 bis 10, dadurch gekennzeichnet, dass das mindestens eine Heizelement (17) mehrere in der Trocknungskammer (10) angeordnete Heizrohre (37) umfasst, wobei jedes Heizrohr mit einer Wärmequelle (38) verbunden ist.

13. Anlage nach Anspruch 12, dadurch gekennzeichnet, dass die Heizrohre (17.1, 17.2, 17.3) in einem der Eingabevorrichtung (11) anschliessenden Bereich (39) der Trocknungskammer (10) zum Bilden einer Hochtemperaturzone enger beieinanderliegend angeordnet sind als im übrigen Bereich der Trocknungskammer oder dass die Mehrzahl der Wärmequellen in diesem Bereich angeordnet sind.

14. Anlage nach Anspruch 12 oder 13, dadurch gekennzeichnet, dass mindestens ein Teil der Heizrohre (37.1, 37.2, 37.3) als Heizschlangen ausgebildet und im wesentlichen U-förmig gebogen sind, wobei sich die Schenkel der Heizschlangen vorzugsweise quer zur Förderrichtung des Schlammes erstrecken.

15. Anlage nach einem der Ansprüche 11 bis 14, dadurch gekennzeichnet, dass als Wärmequellen (34, 38) Gasbrenner, Ölbrenner, Heissgase und/oder Heissdampf eingesetzt werden, wobei die beiden letzteren vorzugsweise mittels Wärmerückgewinnung aus dem Schlammtrocknungsprozess erzeugt werden.

## Revendications

1. Installation de séchage de boue, comprenant
une chambre de séchage (10) avec un dispositif d'entrée (11) pour la boue à sécher (12) débouchant dans la chambre de séchage et une ouverture de déchargement (13) pour la boue séchée,
un dispositif de transport (15) à l'intérieur de la chambre de séchage, s'étendant selon la direction de transport, depuis le dispositif d'entrée vers l'ouverture de déchargement, le dispositif de transport comprenant une surface support (16) pour la boue (12,13) destiné simultanément au transport et au séchage de la boue,
au moins un élément de chauffage (17) disposé en face de la surface support, la boue disposée sur la surface support étant conduite entre l'élément de chauffage et la surface support,
des ouvertures de sortie (18) pour la boue étant disposées côte à côte sur le dispositif d'entrée, à proximité de l'extrémité amont du dispositif de transport,
une pompe de chargement (19) à l'extérieur de la chambre de séchage, avec une ouverture d'admission pour la boue (20) et une conduite (21) vers le dispositif d'entrée,
caractérisée en ce que
le dispositif d'entrée (11) s'étend essentiellement perpendiculairement à la direction de transport et sur toute la largeur (22) du dispositif de transport (15), les ouvertures de sortie (18) sont disposées directement côte à côte sur au moins une rangée (23), laquelle s'étend également sur toute la largeur (22) du dispositif de transport (15), et en ce que le dispositif d'entrée (11) comprend au moins un élément d'interruption (24) afin d'interrompre périodiquement la boue (12) s'écoulant par les ouvertures de sortie (18).

2. Installation selon la revendication 1, caractérisée en ce que le dispositif d'entrée (11) comprend un dispositif de coupe (25) fixé de manière détachable au dispositif d'entrée, les ouvertures de sortie (18) étant disposées sur le dispositif de coupe (25).

3. Installation selon la revendication 2, caractérisée en ce que le dispositif de coupe (25) comprend une première partie (26) immobile comprenant les ouvertures de sortie (18) et au moins une deuxième partie (27), mobile relativement à la première partie (26), le mouvement de la deuxième partie (27) fermant rapidement au moins partiellement les ouvertures de sortie (18).

4. Installation selon la revendication 3, caractérisée en ce que la première partie est un stator (25) de forme tubulaire de section circulaire et en ce que la deuxième partie est un rotor (27) comprenant au moins un élément d'interruption (24), disposée de manière rotative dans le stator (25).

5. Installation selon l'une des revendications 3 ou 4, caractérisée en ce que d'autres ouvertures (28) pour l'entrée de la boue dans le dispositif de coupe (25) sont prévues sur une des ouvertures de sortie (18), sur le côté essentiellement opposé de la première partie (26).

6. Installation selon l'une des revendications 4 ou 5, caractérisée en ce qu'au moins un élément d'interruption (24) comprend deux barres (24.2,24.2) maintenues sur un moyen d'entraînement (29) en forme de disque du rotor (27) et s'étendant sur toute la longueur du rotor, les barres étant disposées symétriquement relativement à l'axe de rotation (30) du rotor, de telle manière qu'une partie de la surface supérieure de chacune des barres passe périodiquement devant les ouvertures de sortie (18) lors de la rotation du rotor, ces dernières étant ainsi au moins partiellement périodiquement fermées.

7. Installation selon l'une des revendications 2 à 5, caractérisée en ce que le dispositif d'entrée (11) comprend un bâti (31), le dispositif de coupe (25) pouvant être introduit dans le bâti.

8. Installation selon l'une des revendications 1 à 7 caractérisée en ce que les ouvertures de sortie (18) ont des formes de fentes, les fentes étant dirigées environ parallèlement à la surface support (16).

9. Installation selon l'une des revendications 1 à 8, caractérisée en ce que le dispositif de transport est un convoyeur à bande (15) avec une bande sans fin (32) entraînée en mouvement, de préférence en acier inoxydable.

10. Installation selon l'une des revendications 1 à 9, caractérisée en ce qu'un dispositif de préchauffage (33) est intercalé entre la pompe de chargement (19) et le dispositif d'entrée (11), afin de préchauffer la boue.

11. Installation selon l'une des revendications 1 à 10, caractérisée en ce qu'au moins un élément de chauffage (17) avec au moins une source de chaleur (34) est une chambre de combustion (35) chauffante, la chambre de combustion et la chambre de séchage étant disposées côte à côte et ayant une paroi de séparation commune (36) en un matériau conducteur de température résistant à la chaleur.

12. Installation selon l'une des revendications 1 à 10, caractérisée en ce qu'au moins un élément de chauffage (17) comprend plusieurs tubes de chauffage (37) disposés dans la chambre de séchage (10), chaque tube de chauffage étant relié à une source de chaleur (38).

13. Installation selon la revendication 12, caractérisée en ce que dans un des dispositifs d'entrée (11) les tubes de chauffage (17.1, 17.2,17.3) sont disposés étroitement les uns à côté des autres afin de former une zone à haute température dans la région (39) de la chambre de séchage (10).

14. Installation selon l'une des revendications 12 ou 13, caractérisée en ce qu'au moins une portion des tubes de chauffage (37.1,37.2,37.3) forme un serpentin de chauffage et est pliée essentiellement en forme de U, un côté des serpentins de chauffage s'étendant de préférence en travers de la direction de transport de la boue.

15. Installation selon l'une des revendications 11 à 14, caractérisée en ce qu'un brûleur à gaz, un brûleur à huile, du gaz chaud et/ou de la vapeur chaude peuvent être utilisés comme source de chaleur (34,38), les deux derniers étant de préférence obtenus au moyen d'un récupérateur de chaleur à partir du procédé de séchage de boue.

## Claims

1. Facility for drying sludge, comprising
a drying chamber (10) with an input device (11), opening out into the drying chamber, for the sludge (12) to be dried and with a discharge opening (13) for the dried sludge (14),
a conveying apparatus (15) inside the drying chamber, which extends in the conveying direction from the input device to the discharge opening, the conveying apparatus having a supporting surface (16) for the sludge (12, 13), which is intended at the same time for conveying and drying the sludge,
at least one heating element (17), essentially opposite the supporting surface, the sludge lying on the supporting surface being led between the heating element and the supporting surface,
output apertures (18) for the sludge disposed on the input device, lying adjacent to one another and close to the upstream end of the conveying apparatus,
a loading pump (19) outside the drying chamber with a feed opening (20) for the sludge and a conveyor pipe line (21) to the input device,
characterised in that the input device (11) extends essentially transversely to the conveying direction over the entire width (22) of the conveying apparatus (15), in that the output apertures (18) are disposed immediately adjacent to one another in at least one row (23) which also extends over the entire width (22) of the conveying apparatus (15), and in that the input device (11) has at least one interruption element (24) for periodic interruption of the sludge (12) emerging through the output apertures (18).

2. Facility according to claim 1, characterised in that the input device (11) comprises a cutting mechanism (25), which is detachably connected to the input device, and in that the output apertures (18) are disposed on the cutting mechanism (25).

3. Facility according to claim 2, characterised in that the cutting mechanism (25) comprises a first stationary part (26) containing the output apertures (18) and at least one second part (27), which is movable relative to the first part (26), the output apertures (18) being at least partially closeable temporarily owing to the movement of the second part (27).

4. Facility according to claim 3, characterised in that the first part is a tubular stator (25) with annular cross-section and in that the second part is a rotor (27) having the at least one interruption element (24), which rotor is rotatably disposed in the stator (26).

5. Facility according to claim 3 or 4, characterised in that on one side of the first part (26) essentially opposite the output apertures (18) there exist further apertures (28) for admission of the sludge into the cutting mechanism (25).

6. Facility according to claim 4 or 5, characterised in that the at least one interruption element (24) comprises two rods (24.1, 24.2), which are held on disk-shaped carriers (29) of the rotor (27) and which extend over the entire length of the rotor, in that the rods are disposed distributed symmetrically with respect to the axis of rotation (30) of the rotor in such a way that part of the surface of each of the rods is led periodically past the output apertures (18) upon rotation of the rotor, whereby said apertures are at least partially closeable periodically.

7. Facility according to one of the claims 2 to 5, characterised in that the input device (11) comprises a housing (31), the cutting mechanism (25) being insertable in the housing.

8. Facility according to one of the claims 1 to 7, characterised in that the output apertures (18) are designed slot-shaped, and in that the slots are oriented approximately parallel to the supporting surface (16).

9. Facility according to one of the claims 1 to 8, characterised in that the conveying apparatus is a belt conveyor (15) with a rotating, drivable continuous belt, preferably of stainless steel.

10. Facility according to one of the claims 1 to 9, characterised in that inserted between the loading pump (19) and the input device (11) is a preheating device (33) for preheating the sludge.

11. Facility according to one of the claims 1 to 10, characterised in that the at least one heating element (17) is a combustion chamber (35), which can be heated up with at least one heat source (34), the combustion chamber and the drying chamber (10) being adjacent to one another and having a common dividing wall (36) made of a heat-resistant, thermo-conducting material.

12. Facility according to one of the claims 1 to 10, characterised in that the at least one heating element (17) comprises a plurality of heating pipes (37) disposed in the drying chamber (10), each heating pipe being connected to a heat source (38).

13. Facility according to claim 12, characterised in that the heating pipes (17.1, 17.2, 17.3) are disposed in an area (39) of the drying chamber (10) adjacent to the input device (11) more closely together than in the rest of the drying chamber to form a high temperature zone, or in that the majority of the heat sources are disposed in this area.

14. Facility according to claim 12 or 13, characterised in that at least part of the heating pipes (37.1, 37.2, 37.3) are designed as heating coils and are bent essentially U-shaped, the arms of the heating coils extending preferably transversely to the conveying direction of the sludge.

15. Facility according to one of the claims 11 to 14, characterised in that used as heat sources (34, 38) are gas burners, oil burners, hot gases and/or superheated steam, the last two being preferably generated by means of heat recovery from the sludge drying process.
